# EUROPÄISCHE PATENTSCHRIFT

(11) **EP 3 324 321 B1**
(45) Veröffentlichungstag und Bekanntmachung des Hinweises auf die Patenterteilung: **26.06.2019**
(21) Anmeldenummer: 16199353.0
(22) Anmeldetag: 17.11.2016
(51) Int. Cl.: G06F 21/10

(54) **VERFAHREN ZUM ERMITTELN EINER BEI EINEM RECHTEVERWERTER ANZUGEBENDEN DATENEINHEIT BEZÜGLICH EINES MUSIKSTÜCKS UND NETZWERK**
METHOD FOR DETERMINING A DATA UNIT TO BE SPECIFIED IN A RIGHTS DISTRIBUTOR RELATING TO A PIECE OF MUSIC AND NETWORK
PROCÉDÉ DE DÉTERMINATION D'UNE UNITÉ DE DONNÉES INDIQUANT UN EXPLOITANT DES DROITS PAR RAPPORT À UN MORCEAU DE MUSIQUE ET RÉSEAU

(43) Veröffentlichungstag der Anmeldung: 23.05.2018
(73) Patentinhaber: Knaack, Denis, 93047 Regensburg (DE); Bauer, Tobias, 85649 Brunnthal (DE)
(72) Erfinder: Knaack, Denis, 93047 Regensburg (DE); Bauer, Tobias, 85649 Brunnthal (DE)
(74) Vertreter: Hofstetter, Schurack & Partner

(56) Entgegenhaltungen:
- DE-A1- 10 144 087
- DE-A1- 10 247 099
- DE-A1-102008 024 554

## Beschreibung

Die Erfindung betrifft ein Verfahren zum Ermitteln mindestens einer ersten vorbestimmten, bei einem Rechteverwerter bzw. einer Verwertungsgesellschaft, wie beispielsweise der GEMA, anzugebenden Dateneinheit bezogen auf mindestens ein vorbestimmtes erstes Musikstück. Zur Erfindung gehört auch ein Netzwerk.

Bekanntlich müssen bei Film- und Fernsehproduktionen für die bei diesen Produktionen verwendeten Musiktitel zur musikalischen Hinterlegung Gebühren an den entsprechenden Rechteverwerter wie beispielsweise die GEMA entrichtet werden. Für eine solche Produktion muss entsprechend eine Liste erstellt werden, die die verwendeten Musiktitel, insbesondere Titel und Interpret, sowie weitere, vom entsprechenden Rechteverwerter geforderte Angaben enthält. Diese Angaben sind unter anderem die Zeitdauer, für die der jeweilige Musiktitel in einer solchen Produktion verwendet wird, bspw. der sogenannte Labelcode, die Artikelnummer, die jedem Musiktitel zugeordnet ist, usw.

Die Erstellung einer derartigen Liste ist derzeit mit enormem Aufwand verbunden und fehleranfällig. Die übliche Vorgehensweise bei der Erstellung einer Fernsehproduktion beziehungsweise eines Schnittprojekts für eine solche ist dabei wie folgt: Zunächst werden Audiotitel, zum Beispiel Chartmusik, Produktionsmusik, oder Soundeffekte in eine Schnittsoftware importiert, wie beispielsweise den AVID Media Composer, Adobe Premiere oder Final Cut Pro und beim Importieren in ein MXF-File, m4a o.ä gewandelt. Es wird dabei nur der Name der Ursprungsdatei angezeigt, das heißt, handelt es sich bei dem Musikstück beispielsweise um ein sogenanntes "Intro" eines Albums, so wird als Titel nur "Intro" angezeigt. Ist das Projekt fertig geschnitten, wird die gewünschte Sequenz geöffnet und alle Spuren, die Titel enthalten, die bei einer Verwertungsgesellschaft angegeben werden müssen, markiert.

Aus dieser Sequenz wird eine sogenannte Subsequenz erstellt, die nur die gewünschten Spuren enthält. Diese Subsequenz wird dann beispielsweise als sogenannte AAF-Datei exportiert. Beim Erstellen der AAF-Datei werden aus den verwendeten Titeln neue Clips mit der exakt im Schnittprojekt verwendeten Länge erstellt. Diese Clips werden wiederum markiert und in eine Textdatei wie beispielsweise Tab Delimited, ein einfaches Textformat für Daten in einer tabellarischen Struktur, gewandelt. Eine solche Exportdatei enthält dabei dann üblicherweise nur noch den Namen der Ursprungsdatei, Anfangszeit und Endzeit beziehungsweise Zeitdauer für einen entsprechenden Abschnitt des Schnittprojekts. Kommt beispielsweise ein Musikstück mehrmals in einem Schnittprojekt vor, so wird dieses in der Textdatei auch entsprechend häufig mit jeweiligen Anfangs- und Endzeiten beziehungsweise Zeitdauern aufgelistet.

Bei der Erstellung der Liste, die bei einer Verwertungsgesellschaft wie beispielsweise der GEMA eingereicht werden muss, stellen sich nun folgende Schwierigkeiten: Zum einen sind die aufgelisteten Musikstücke anhand ihres Titels nicht mehr eindeutig identifizierbar, da diese in der Exportdatei lediglich zum Beispiel mit "Intro" bezeichnet sind, ohne Angabe des entsprechenden Komponisten oder Interpreten und des Albums. Um nun herauszufinden, um welchen Interpreten es sich beispielsweise handelt, muss die entsprechende Person wiederum in das jeweilige Musikstück hineinhören, um dieses identifizieren zu können. Weiterhin muss überprüft werden, insbesondere wiederum manuell, ob dieses Musikstück öfter in dieser Exportdatei auftaucht, und dann die entsprechenden Zeitdauern addiert werden, um die Gesamtspielzeit zu ermitteln. Diese Daten werden dann manuell in eine Liste eingetragen. Hierbei sind jedoch noch weitere zahlreiche Angaben erforderlich wie beispielsweise der oben genannte Labelcode, die Artikelnummer oder auch die EAN-Nummer, Bestellnummer, Katalognummer usw., die nun für jedes einzelne verwendete Musikstück noch in Erfahrung gebracht werden müssen. Hierzu müssen nun manuell diverse Datenbanken durchsucht werden und die entsprechenden Daten werden dann händisch in die Liste eingetragen. Die fertiggestellte Liste kann dann an den entsprechenden Rechteverwerter übermittelt werden.

Aufgrund all dieser manuell beziehungsweise durch betreffende Personen durchzuführenden zahlreichen Schritte, die zur Erstellung der entsprechenden Liste für einen Rechteverwerter erforderlich sind, ist aktuell das Erstellen einer solchen Liste mit einem erheblichen Zeitaufwand verbunden und fehleranfällig. Für eine durchschnittliche Fernsehproduktion beläuft sich dabei der Aufwand für die Erstellung einer solchen Liste auf mehrere Stunden bis zu mehreren Tagen.

Die DE 101 44 087 A1 beschreibt ein Gerät zur Erkennung und Registrierung von urheberrechtlich geschützten Musiksequenzen in Rundfunk- und Fernsehprogrammen. Das beschriebene Gerät untersucht dabei analoge Tonfrequenzquellen wie Fernsehe- und Radioprogramme darauf hin, ob abgespeicherte Musikstücke oder Teile davon in ihnen gefunden werden können.

Die DE 10 2008 024 554 A1 beschreibt ein elektronisches Meldegerät für reproduzierende Musiker zur Erleichterung der Abrechnung von Lizenzgebühren. Dieses Meldegerät verfügt über eine vorgefertigte Liste von spielbaren Musiktiteln, die im Datenspeicher ablegbar und im Display darstellbar ist, wobei eine Liste von gespielten Titeln durch Auswahl aus der Liste spielbarer Titel darstellbar ist.

Die DE 102 47 099 A1 beschreibt ein Verfahren zur Identifizierung von Daten und ein System zum Bereitstellen von Daten. Dabei wird durch einen Benutzer, der seitens eines Senders ausgesendete Daten begehrt, Kontakt zu einem Service-Provider aufgenommen, wobei der Benutzer sowie der durch den Benutzer empfangene Sender durch den Service-Provider identifiziert wird, wobei zwecks Identifizierung der begehrten Daten ein Abgleich der Benutzeranfrage sowie den seitens des durch den Benutzer empfangenen Senders gesendeten Daten erfolgt, und wobei der Benutzer zumindest eine Auswahl der identifizierten Daten bereitstellen kann.

Aufgabe der vorliegenden Erfindung ist es daher, ein Verfahren und ein Netzwerk bereitzustellen, welche eine Vereinfachung und Zeitersparnis bei der Ermittlung zumindest einer bei einem Rechteverwerter anzugebenden Dateneinheit, insbesondere bei der Erstellung der vom Rechteverwerter geforderten Liste, ermöglichen.

Diese Aufgabe wird gelöst durch ein Verfahren und ein Netzwerk mit den Merkmalen gemäß den jeweiligen unabhängigen Ansprüchen. Vorteilhafte Ausgestaltungen der Erfindung sind in den abhängigen Ansprüchen angegeben.

Bei dem erfindungsgemäßen Verfahren zum Ermitteln mindestens einer ersten vorbestimmten, bei einem Rechteverwerter anzugebenden Dateneinheit bezogen auf mindestens ein vorbestimmtes erstes Musikstück wird eine Datenquelle bereitgestellt und gemäß einem ersten Überprüfen überprüft, ob auf Basis der Datenquelle zumindest eine vorbestimmte Metadateneinheit, welche dem mindestens einen ersten Musikstück zugeordnet ist, ermittelbar ist. Des Weiteren wird eine kommunikative Verbindung zu einer Datenbank hergestellt, welche für eine Mehrzahl an zweiten Musikstücken jeweils mindestens eine zweite vorbestimmte Dateneinheit bezogen auf die jeweiligen zweiten Musikstücke bereitstellt, wobei den zweiten Musikstücken jeweils zumindest eine zweite Information zugeordnet ist. Falls das erste Überprüfen ergibt, dass die zumindest eine vorbestimmte Metadateneinheit ermittelbar ist, wird diese ermittelt und gemäß einem zweiten Überprüfen überprüft, ob zumindest eines der zweiten Musikstücke mit dem mindestens einen ersten Musikstück identifizierbar ist, wobei das zweite Überprüfen auf Basis eines Vergleichs der zumindest einen Metadateneinheit des mindestens einen ersten Musikstücks mit der zumindest einen zweiten Information der jeweiligen zweiten Musikstücke erfolgt. Falls das zweite Überprüfen ergibt, dass zumindest eines der zweiten Musikstücke mit dem mindestens einen ersten Musikstück identifizierbar ist, wird die zweite vorbestimmte Dateneinheit des mit dem mindestens einen ersten Musikstück identifizierbaren zweiten Musikstücks als die vorbestimmte, bei einem Rechteverwerter anzugebende Dateneinheit bezogen auf das erste Musikstück bereitgestellt. Weiterhin wird als Datenquelle ein Anwendungsprogramm, in welchem das mindestens eine erste Musikstück verwendet wurde, und/oder eine Datei, welche einen Verweis auf das in einem Anwendungsprogramm verwendete mindestens eine erste Musikstück enthält, bereitgestellt.

Die Erfindung beruht dabei auf der Erkenntnis, dass wenngleich auch die eingangs beschriebene Exportdatei direkt keine Metadaten, zumindest nicht in ausreichender Weise, anhand welcher sich ein Musikstück eindeutig identifizieren lässt, enthält, solche Metadaten jedoch anhand vielzähliger weiterer und im Nachfolgenden näher beschriebenen Quellen automatisch beziehen lassen, und damit vorteilhafterweise benutzen lassen, um in Datenbanken nach den so identifizierten Musikstücken zu suchen und entsprechend von diesen Datenbanken automatisch die weiteren benötigten und bei Rechteverwertern anzugebenen Informationen, insbesondere die mindestens eine anzugebende Dateneinheit, zu beziehen. Dies hat den großen Vorteil, dass nun auch weitere, bei einem Rechteverwerter anzugebenden Daten wie beispielsweise der Labelcode, die Artikelnummer, usw. ebenfalls automatisch ermittelt und bereitgestellt werden können. Dies wird also dadurch bewerkstelligt, dass automatisch eine Verbindung zu einer Datenbank aufgebaut wird, in welcher entsprechend automatisch nach den betreffenden Informationen gesucht werden kann. Eine solche Datenbank kann beispielsweise eine eigens für diesen Zweck bereitgestellte Datenbank sein, die für vielzählige Musikstücke, das heißt die zweiten Musikstücke, mit entsprechenden Titeln und Interpreten auch die jeweiligen Angaben in Bezug auf Labelcode, Artikelnummer, Bestellnummer usw. umfasst. Auch können bereits bestehende Datenbanken, die solche Informationen zur Verfügung stellen, wie beispielsweise Discogs oder Datenbanken der Musiklabels beispielsweise von Earmotion, Extreme Music, Warner Chappell usw. genutzt werden. Die also für das erste Musikstück gewonnenen Metadateneinheiten, wie beispielsweise Interpret und Titel, können nun genutzt werden, um nach dem entsprechenden Musikstück in diesen Datenbanken zu suchen, insbesondere durch Vergleich der Angaben in Bezug auf Interpret und Titel, und es können dann die für das identifizierte Musikstück in diesen Datenbanken bereitgestellten weiteren Dateneinheiten, das heißt die entsprechende mindestens eine zweite vorbestimmte Dateneinheit, ausgelesen werden.

Hierdurch lässt sich enorm viel Zeit bei der Erstellung von z.B. einer GEMA-Liste oder bei einem anderen Rechteverwerter anzugebende Liste über verwendete Musikstücke, z.B. bei Film- und Fernsehproduktionen einsparen. Auch bei Internetfilmen, wie zum Beispiel für Youtube oder Vimeo, oder auch Radioproduktionen, für die oben genannte Listen bei entsprechenden Rechteverwertern anzugeben sind, lassen sich durch das erfindungsgemäße Verfahren große Zeitvorteile erzielen, Fehler vermeiden und der Aufwand bei der Erstellung einer solchen Liste deutlich reduzieren. Neben der GEMA stellen solche Rechteverwerter beispielsweise auch die GVL in Deutschland dar, sowie zum Beispiel in Österreich AKM, in der Schweiz SUISA, in Italien SIAE oder in Spanien DAMA.

Die bereitgestellte Datenquelle kann beispielsweise eine Datei, insbesondere eine Exportdatei darstellen, wie die eingangs genannte, die nach dem Erstellen eines Schnittprojekts, oder im Allgemeinen eines Video- und/oder Audio-Projekts, welches mittels eines Video- und/oder Audio-Programms erstellt wurde, exportiert wurde, insbesondere die eingangs genannte AAF-Datei oder die Textdatei, in die diese AAF-Datei konvertiert wird. Weiterhin kann die Datenquelle auch jede andere beliebige Datei darstellen, zum Beispiel eine OMF(Open Media Framework)-Datei oder eine EDL(Edit Decision List)-Datei. Wenn eine solche Datei aus einem Audio- und / oder Videoprogramm exportiert wird, kann diese einen Verweis auf das bzw. die verwendeten Musikstücke, zum Beispiel in Form eines Pfads zu einer Quelldatei enthalten, sowie optional, aber nicht notwendigerweise, auch den Titel des entsprechenden ersten Musikstücks sowie beispielsweise auch die beschriebene Anfangs- oder Endzeit beziehungsweise Zeitdauern der Verwendung eines betreffenden Musikstücks in einem Video- und/oder Audio-Projekt umfassen. Hierdurch ist es besonders vorteilhaft, eine solche Exportdatei als die Datenquelle zu verwenden, um nach den gewünschten Metainformationen zu suchen. Die bereitgestellte Datenquelle kann aber auch ein Anwendungsprogramm, wie zum Beispiel ein Audioprogramm, wie beispielsweise das eingangs erwähnte Schnittprogramm, aber auch jedes andere Anwendungsprogramm, darstellen, auf welches zum Beziehen der Metainformationen zugegriffen werden kann. Ein solches Anwendungsprogramm kann auch ein Programm zur Songerkennung durch eine Songanalyse, wie z.B Shazam, darstellen. Die in einem Anwendungsprogramm enthaltenen Daten sind dabei üblicherweise in einem Arbeitsspeicher und nicht notwendigerweise auf einer Festplatte gespeichert. Anwendungsprogramme wie beispielsweise die Schnittsoftware, enthalten typischerweise ebenfalls Informationen über die verwendeten Musikstücke, wie Interpret und/oder Titel, einen Pfad zur Quelldatei der betreffenden Musikstücke oder auch die Zeitdauern der Verwendung, so dass auch auf diese Anwendungen selbst zugegriffen werden kann, um entsprechende Informationen, die später noch näher ausgeführt werden, zu beziehen.

Vorteilhafterweise kann die mindestens eine vorbestimmte, bei dem Rechteverwerter anzugebende Dateneinheit sowie auch die korrespondierende, zumindest eine zweite vorbestimmte Dateneinheit jeweils einen Labelcode und/oder eine Artikelnummer eines Albums darstellen. Dies sind die bei den meisten Rechteverwertern anzugebenden Dateneinheiten. Je nach Rechteverwerter kann aber auch die mindestens eine Datenbank dazu genutzt werden, nach anderen vorbestimmten Dateneinheiten zu suchen. Darüber hinaus ist es bevorzugt, dass die zumindest eine vorbestimmte Metadateneinheit und die zumindest eine zweite Information jeweils einen Titel und/oder Interpreten darstellen. Musikstücke lassen sich bereits durch Angabe von Titel und Interpret beziehungsweise Komponist vorteilhafterweise eindeutig identifizieren. Unter Umständen kann die Metadateneinheit aber auch ein Album darstellen, was die Identifikation von Musikstücken noch zuverlässiger macht. Insbesondere können alle Metadateneinheiten, die zu einem bestimmten Musikstück in der betreffenden Quelldatei gefunden werden können, auch genutzt werden, um dieses Musikstück unter den zahlreichen zweiten Musikstücken der Datenbanken ausfindig zu machen beziehungsweise zu identifizieren und dann die betreffenden, zu diesem identifizierten Musikstück angegebenen Dateneinheiten abzurufen.

Gemäß einer weiteren vorteilhaften Ausgestaltung der Erfindung beinhaltet das erste Überprüfen, dass überprüft wird, ob die Datenquelle die zumindest eine vorbestimmte Metadateneinheit enthält. Ist dies der Fall, so kann diese auf besonders einfache Weise direkt aus der Datenquelle bezogen werden. Wenn also die Exportdatei oder das Anwendungsprogramm selbst zu einem Musikstück, das heißt dem mindesten einen ersten Musikstück, Angaben über Interpret und/oder Titel enthält, so können diese Angaben direkt ausgelesen werden.

Alternativ oder zusätzlich kann gemäß einer weiteren vorteilhaften Ausgestaltung der Erfindung das erste Überprüfen auch beinhalten, dass überprüft wird, ob die Datenquelle einen Pfad zu einer Quelldatei, in welcher das mindestens eine erste Musikstück in Form von Musikdaten gespeichert ist, beinhaltet. Weiterhin wird für den Fall, dass die Datenquelle den Pfad zur Quelldatei beinhaltet und unter der Voraussetzung, dass unter Verwendung des Pfads zur Quelldatei die Quelldatei gefunden wird, auf die Quelldatei zugegriffen und überprüft, ob die Quelldatei die zumindest eine vorbestimmte Metadateneinheit umfasst.

Die Quelldatei kann im Allgemeinen durch eine CD, einen USB-Stick, eine Festplatte oder über das Internet einer Rechnereinrichtung bereitgestellt werden.

Dieser Ausgestaltung der Erfindung liegt die Erkenntnis zugrunde, dass zwar die Exportdatei an sich üblicherweise keine Angaben über beispielsweise den Komponisten oder Interpreten eines entsprechenden Musikstücks haben muss, diese Angaben jedoch in der Quelldatei zu finden sein können und nun der in der Exportdatei üblicherweise für ein entsprechendes erstes Musikstück angegebene Pfad zur Quelldatei genutzt werden kann, um diese zusätzlichen Informationen, auf Basis welcher eine eindeutige Identifikation des ersten Musikstücks möglich ist, vorteilhafterweise aus der Quelldatei zu beziehen. Es ist also vorteilhafterweise nicht mehr notwendig, sich jedes der in der Exportdatei angegebenen ersten Musikstücke nach dem Erstellen eines Video- und/oder Audio-Projekts, z.B. eines Schnittprojekts, noch einmal anzuhören, um diese zu identifizieren und beispielsweise auch den Interpreten für die in der Exportdatei angegebenen Titel herauszufinden. Titel und/oder Interpret können damit vorteilhafterweise automatisch unter Verwendung des Pfads zur Quelldatei zu einem jeweiligen entsprechenden ersten Musikstück ausgelesen werden. Die Exportdatei kann dabei nicht nur die Daten bezüglich eines einzigen ersten Musikstücks enthalten, sondern auch mehrerer erster Musikstücke, die beispielsweise in einem entsprechenden Schnittprojekt verwendet wurden. Demnach enthält dann die Exportdatei auch entsprechend viele Pfade zu den jeweiligen Quelldateien und für ein jeweiliges erstes Musikstück können dann die entsprechenden Metadateneinheiten aus den jeweiligen Quelldateien ausgelesen und bereitgestellt werden. Damit können automatisch zu jedem, in einem Schnittprojekt verwendeten Musikstück Angaben in Bezug auf Titel und Komponist beziehungsweise Interpret automatisch zur Verfügung gestellt werden.

Jedoch nicht nur Exportdateien als Datenquelle sondern auch Anwendungsprogramme, die im Zusammenhang mit Musikstücken verwendet werden, enthalten in der Regel Verweise auf Musikstücke in Form von Pfaden zu den Quelldateien, aus welchen die in den betreffenden Anwendungsprogrammen verwendeten Musikstücke importiert wurden. Diese können wie oben beschrieben vorteilhafterweise ebenfalls verwendet werden, um die gesuchten oder noch fehlenden Metadateneinheiten zu einem oder mehreren entsprechenden Musikstücken aus den jeweiligen Quelldateien zu beziehen.

Unter Umständen kann es auftreten, dass die Quelldatei jedoch nicht gefunden wird, beispielsweise weil diese bereits gelöscht wurde oder zum Beispiel der USB-Stick von der entsprechenden Rechnereinrichtung wieder getrennt wurde. Zwar ist auch in den meisten Fällen in einer Quelldatei eine Metadateneinheit wie beispielsweise Titel und Interpret und gegebenenfalls auch das Album für ein jeweiliges Musikstück vorhanden, jedoch kann es auch hier in seltenen Fällen vorkommen, dass eine Quelldatei die gesuchte vorbestimmte Metadateneinheit nicht umfasst. Daher ist es eine besonders vorteilhafte weitere Ausgestaltung der Erfindung, dass für den Fall, insbesondere auch nur für den Fall, dass die Quelldatei unter Verwendung des Pfads nicht gefunden wird, oder falls das erste Überprüfen ergibt, dass die Quelldatei die zumindest eine vorbestimmte Metadateneinheit nicht umfasst, eine Analyse eines für den Pfad, z.B. in der Exportdatei oder dem Anwendungsprogramm, angegebenen Namens durchgeführt wird und ein drittes Überprüfen erfolgt, gemäß welchem überprüft wird, ob der Name zumindest einen Teil der mindestens einen vorbestimmten Metadateneinheit umfasst. Diese Ausgestaltung der Erfindung beruht auf der Erkenntnis, dass die Namen für Quelldateien von Musikstücken üblicherweise auch zumindest Teile des Namens des Interpreten beziehungsweise des Titels des Musikstücks beinhalten, wie beispielsweise Madonna-Frozen.mp3. Damit lässt sich vorteilhafterweise die vorbestimmte Metadateneinheit oder zumindest Teile davon unter Umständen auch aus dem Pfadnamen extrahieren. Mit einer solchen, aus dem Pfadnamen extrahierten Metadateneinheit oder zumindest Teilen davon kann in gleicher Weise verfahren werden, wie für die aus der Quelldatei ausgelesene, vorbestimmte Metadateneinheit.

Zwar ist die Wahrscheinlichkeit höher, die zur eindeutigen Identifizierung eines Musikstücks nötigen Metadaten als die mindestens eine bestimmte Metadateneinheit in der Quelldatei zu finden als in einem Pfadnamen, jedoch kann es auch vorgesehen sein, dass zum Ermitteln der mindestens einen das erste Musikstück betreffenden Metadateneinheit zuerst, d.h. vor dem Zugreifen auf die Quelldatei, oder auch nur eine Pfadnamenanalyse durchgeführt wird. Daher ist es gemäß einer weiteren Ausführungsform der Erfindung vorgesehen, dass das erste Überprüfen beinhaltet, dass überprüft wird, ob die Datenquelle einen Pfad zu einer Quelldatei, in welcher das mindestens eine erste Musikstück in Form von Musikdaten gespeichert ist, beinhaltet, wobei für den Fall, dass die Datenquelle den Pfad beinhaltet, eine Analyse eines für den Pfad in der Datenquelle angegebenen Namens durchgeführt wird und ein drittes Überprüfen erfolgt, gemäß welchem überprüft wird, ob der Name zumindest einen Teil der mindestens einen vorbestimmten Metadateneinheit umfasst. Eine solche Pfadnamenanalyse kann damit auch unabhängig von einem Zugriff auf eine Quelldatei erfolgen. Auch hier kann nun im Fall mit einer aus einem Pfadnamen extrahierten Metadateneinheit verfahren werden, wie zuvor beschrieben.

Daher ist es eine besonders vorteilhafte Ausgestaltung der Erfindung, dass für den Fall, dass das dritte Überprüfen ergibt, dass der Name zumindest einen Teil der mindestens einen vorbestimmten Metadateneinheit umfasst, das zweite Überprüfen auf Basis eines Vergleichs des zumindest einen Teils der mindestens einen vorbestimmten Metadateneinheit des mindestens einen ersten Musikstücks mit der zumindest einen zweiten Information der jeweiligen zweiten Musikstücke erfolgt. Kann beispielsweise ein Teil des Titels oder ein Teil des Namens des Interpreten aus dem Pfadnamen extrahiert werden, kann auf Basis dieser Information in der Datenbank nach einem Musikstück gesucht werden, das zumindest mit diesen Teilen von Titel und Interpret übereinstimmt. Für den Fall, dass auf Basis dieses Überprüfens festgestellt wird, dass zumindest eines der zweiten Musikstücke mit dem mindestens einen ersten Musikstück identifizierbar ist, kann wiederum die zweite vorbestimmte Dateneinheit, also beispielsweise der Labelcode, des mit dem mindestens einen ersten Musikstück identifizierbaren zweiten Musikstücks als die vorbestimmte, bei einem Rechteverwerter anzugebende Dateneinheit bezogen auf das erste Musikstück bereitgestellt werden.

Durch diese Vorgehensweise wird die Wahrscheinlichkeit, ein Musikstück erfolgreich in einer Datenbank auffinden zu können, deutlich erhöht, da nicht nur Daten aus der Quelldatei, sondern auch der Pfadname selbst genutzt werden kann, um das erste Musikstück identifizieren zu können.

Bei einer weiteren vorteilhaften Ausgestaltung der Erfindung wird eine Liste erstellt, insbesondere wiederum automatisch, die für das mindestens eine erste Musikstück die mindestens eine vorbestimmte Metadateneinheit und die mindestens eine erste vorbestimmte Dateneinheit umfasst. Vorzugsweise umfasst die Liste also Titel und/oder Interpret des ersten Musikstücks als die mindestens eine vorbestimmte Metadateneinheit und den Labelcode und/oder die Artikelnummer als die mindestens eine erste vorbestimmte Dateneinheit. Vorzugsweise können so alle notwendigen, bei einem Rechteverwerter anzugebenden Informationen in eine solche Liste automatisch eingetragen werden.

Eine solche Liste kann darüber hinaus auch für jeweilige unterschiedliche Rechteverwerter erstellt werden. Diese Zusatzinformation, welcher Rechteverwerter einem betreffenden Musikstück zugeordnet ist, kann dabei ebenfalls den Datenbanken in gleicher Weise wie die bei dem Rechteverwerter anzugebende mindestens eine vorbestimmte Dateneinheit entnommen werden.

Eine weitere, bei einem Rechteverwerter üblicherweise anzugebende Information stellt auch die Zeitdauer dar, für die das betreffende Musikstück verwendet wurde. Auch solche Angaben können vorteilhafterweise automatisch aus der Datenquelle, insbesondere der Exportdatei oder dem Anwendungsprogramm, entnommen werden.

Daher stellt es eine weitere vorteilhafte Ausgestaltung der Erfindung dar, dass überprüft wird, ob die Datenquelle zumindest eine dem Musikstück zugeordnete Zeitangabe, insbesondere eine Angabe über einen Anfangszeitpunkt und einen Endzeitpunkt oder eine Zeitdauer, aus welcher eine Gesamtzeitdauer ermittelt wird, umfasst, wobei für den Fall, dass dem so ist, die Zeitangabe ausgelesen wird. Insbesondere für den Fall, dass die bereitgestellte Datenquelle mehrere dem mindestens einen ersten Musikstück zugeordnete Zeitangaben aufweist, kann eine Gesamtzeitdauer aus den jeweiligen Zeitangaben ermittelt werden.

Die Datenquelle kann neben dem Pfad zur Quelldatei üblicherweise eine zumindest eine dem Pfad zugeordnete Zeitangabe enthalten, wie die oben beschriebene, die eine Angabe über einen Anfangszeitpunkt und einen Endzeitpunkt oder eine Zeitdauer darstellt. Wird ein Musikstück in einem Projekt mehrfach verwendet, so taucht üblicherweise auch der Pfad sowie die betreffenden Zeitangaben zu diesem Musikstück entsprechend häufig in der Datenquelle, z.B. einer Exportdatei, auf. Diese Zeitangaben können für ein jeweiliges Musikstück entsprechend ausgelesen, und ggf. auch bei Mehrfachverwendung des Musikstücks automatisch addiert werden.

Die Zeitangaben können sich dabei auf den Anfangszeitpunkt und den Endzeitpunkt ihrer Verwendung im Schnittprojekt oder auch auf die Zeitdauer zwischen Anfangs- und Endzeitpunkt beziehen. Um die Gesamtzeitdauer für dieses Musikstück zu ermitteln, können somit die ein und demselben Musikstück zugeordneten Zeitdauern einfach addiert werden. Dies gilt auch, wenn mehrere unterschiedliche erste Musikstücke in der Datenquelle vorhanden bzw. bezeichnet sind. Im einfachsten Fall, und zum Beispiel wenn die Datenquelle eine Exportdatei darstellt, können mehrfach verwendete Musikstücke anhand ihrer identischen Pfadnamen als das gleiche Musikstück identifiziert werden, und die jeweiligen Zeitangaben zu den identischen Pfadnamen addiert werden, um dadurch die Gesamtzeitdauer für dieses Musikstück zu ermitteln. Es kann jedoch auch vorkommen, dass dem gleichen Musikstück bei mehrfacher Verwendung im Anwendungsprogramm unterschiedliche Pfadnamen und damit unterschiedliche Pfade zu unterschiedlichen Quelldateien zugeordnet sind. Dies kann zum Beispiel vorkommen, wenn mehrere verschiedene Benutzer an einem Video- oder Audioprojekt arbeiten, die das gleiche Musikstück verwenden, dieses jedoch aus unterschiedlichen Quellen beziehen. Daher ist es besonders vorteilhaft, wenn bei mehrfacher Verwendung von gegebenenfalls auch unterschiedlichen Musikstücken, denen für eine jeweilige Verwendung eine Zeitangabe zugeordnet ist, gleiche Musikstücke anhand ihrer Metadaten einander zugeordnet und als gleiches Musikstück identifiziert werden und dann entsprechend die Zeitangaben des als gleiches Musikstück identifizierten Musikstücke zur Gesamtzeitdauer addiert werden. Dies ist insbesondere dann besonders vorteilhaft, wenn die Datenquelle das Anwendungsprogramm darstellt, da dieses üblicherweise keine Pfadnamen sondern häufig die den Musikstücken zugeordnete Metadaten wie Interpret und Titel direkt enthält, die somit vorteilhafterweise dazu genutzt werden können, um gleiche Musikstücke bei mehrfacher Verwendung zu identifizieren um die Gesamtzeitdauer zu ermitteln.

Entsprechend ist es vorteilhaft, die Gesamtzeitdauer für ein jeweiliges Musikstück nach Ermittlung einer oder mehrerer dem Musikstück zugeordneten Metadateneinheiten durchzuführen. Diese können dann besonders vorteilhaft auch dazu verwendeten werden, mehrfach verwendete aber gleiche Musikstücke miteinander zu identifizieren. Für jedes, in einem Schnittprojekt verwendete Musikstück kann somit automatisch und auf besonders zeitsparende Weise auch die Gesamtzeitdauer anhand der Datenquelle ermittelt werden.

Diese Gesamtzeitdauer kann dann auf vorteilhafte Weise gemäß einer weiteren Ausgestaltung der Erfindung für das mindestens eine erste Musikstück in der Liste abgelegt werden.

Dadurch kann vorteilhafterweise vollkommen automatisiert und ohne das Zutun eines Benutzers eine vollständige Liste der bei einem Rechteverwerter anzugebenden Angaben erstellt werden. Die Erfindung und ihre Ausgestaltungen ermöglichen es damit, die bei einem Rechteverwerter anzugebenden Daten vollkommen automatisiert zur Verfügung zu stellen. Dies bedeutet eine enorme Zeitersparnis bei der Erstellung entsprechender Listen wie zum Beispiel einer sogenannten GEMA-Liste.

Sollte es dennoch aus irgendwelchen Gründen der Fall sein, dass bestimmte Angaben nicht oder zumindest nicht vollständig oder eindeutig ermittelt werden können, so sind die folgenden Ausgestaltungen der Erfindung besonders vorteilhaft:
Im Allgemeinen kann es vorgesehen sein, dass an jeder beliebigen Stelle des Verfahrensablaufs dem Benutzer eine Interaktionsmöglichkeit bereitgestellt ist. Können die erforderlichen Daten für ein Musikstück nicht oder nicht vollständig ermittelt werden, seien es die beschriebenen Metadateneinheiten, die bei dem Rechteverwerter anzugebenden Dateneinheiten, der Pfad zur Quelldatei und/oder Zeitangaben, so kann ein entsprechender Hinweis an den Benutzer ausgegeben werden, dass eine der genannten Informationen nicht ermittelt werden konnte. Weiterhin kann dem Benutzer die Möglichkeit bereitgestellt sein, die fehlenden Angaben manuell zu ergänzen, zum Beispiel den Pfad zur Quelldatei, falls dieser ihm bekannt ist, manuell einzugeben, woraufhin das Verfahren wie beschrieben fortgeführt werden kann.

Beispielsweise kann es gemäß einer weiteren vorteilhaften Ausgestaltung der Erfindung auch vorgesehen sein, dass, falls das zweite Überprüfen ergibt, dass keines der zweiten Musikstücke mit dem mindestens einen ersten Musikstück eindeutig identifizierbar ist, für eine Identifikation in Frage kommende Kandidaten aus den zweiten Musikstücken ermittelt werden und die Kandidaten über eine Benutzerschnittstelle an einen Benutzer ausgegeben werden und weiterhin eine Auswahlmöglichkeit für den Benutzer zur Auswahl eines der Kandidaten bereitgestellt wird. Beispielsweise kann es vorkommen, dass der Vergleich der zumindest einen Metadateneinheit, oder auch nur eines Teils davon, sollte dieser zum Beispiel aus dem Pfadnamen ermittelt worden sein, des mindestens einen ersten Musikstücks mit der zumindest einen zweiten Information der jeweiligen zweiten Musikstücke ergibt, dass mehrere der zweiten Musikstücke mit dem mindestens einen ersten Musikstück identifizierbar wären, dann können diese als geeignete Kandidaten dem Benutzer zur Auswahl bereitgestellt werden, der dann entsprechend den richtigen dieser Kandidaten auswählen kann. Dieser Fall kann beispielsweise auftreten, wenn als Metadateneinheit lediglich der Titel eines Musikstücks ermittelt werden kann, dieser Titel jedoch in der betreffenden Datenbank mehrfach für verschiedene Komponisten beziehungsweise Interpreten vorhanden ist. Durch diese vorteilhafte Ausgestaltung der Erfindung kann dann dem Benutzer zumindest eine Vorauswahl bereitgestellt werden, welcher dann lediglich aus wenigen dieser Auswahlmöglichkeiten auswählen kann, um das betreffende zweite Musikstück mit dem ersten Musikstück zu identifizieren. Alle weiteren Verfahrensschritte, wie das Bereitstellen der zweiten vorbestimmten Dateneinheit des letztendlich dann manuell ausgewählten und mit dem mindestens einen ersten Musikstück identifizierten zweiten Musikstücks als die vorbestimmte, bei dem Rechteverwerter anzugebende Dateneinheit, sowie auch die automatische Listenerstellung können dann wiederum vorteilhafterweise automatisch durchgeführt werden. Auch kann dem Benutzer noch eine weitere Auswahlmöglichkeit bereitgestellt sein, zum Beispiel für den Fall, dass zu viele potentielle Kandidaten gefunden wurden, um die Suche noch zu verfeinern. Der Benutzer kann dazu manuell eine weitere Information das erste Musikstück betreffend eingeben, wie beispielsweise den Interpreten, falls als Metadateneinheit nur der Titel gefunden wurde. Auf Basis einer solchen zusätzlichen Eingabe können die gefundenen Kandidaten nochmal selektiert werden.

Zudem kann es gemäß weiteren Ausgestaltungen der Erfindung auch vorgesehen sein, dass dem Benutzer eine Rückmeldung ausgegeben wird. Auch eine solche Rückmeldung kann dabei an jeder beliebigen Stelle der Verfahrenskette ausgegeben werden und beispielsweise abhängig von den Ergebnissen der jeweiligen Verfahrensschritte sein. Beispielsweise kann nach dem ersten Überprüfen, ob auf Basis der Datenquelle die zumindest eine vorbestimmte Metadateneinheit ermittelbar ist, eine entsprechende Rückmeldung abhängig von einem Ergebnis dieses ersten Überprüfens ausgegeben werden. Weiterhin können auch entsprechende Rückmeldungen in Abhängigkeit von Ergebnissen von den jeweiligen optionalen weiteren Überprüfungsschritten im Zuge des ersten Überprüfens ausgegeben werden, zum Beispiel in Bezug auf das Überprüfen, ob die Datenquelle die vorbestimmte Metadateneinheit enthält, in Bezug auf das Überprüfen, ob die Datenquelle den Pfad zur Quelldatei enthält und/oder in Bezug auf das Überprüfen, ob die Quelldatei die vorbestimmte Metadateneinheit enthält. Auch kann nach dem zweiten Überprüfen, ob zumindest eines der zweiten Musikstücke mit dem mindestens einen ersten Musikstück identifizierbar ist, eine entsprechende Rückmeldung abhängig von einem Ergebnis dieses zweiten Überprüfens ausgegeben werden. In gleicher Weise kann auch in Abhängigkeit von dem Ergebnis des dritten Überprüfens, ob der Name des Pfads einen Teil der vorbestimmten Metadateneinheit umfasst, eine Rückmeldung ausgegeben werden, sowie auch beispielsweise in Abhängigkeit von einem Ergebnis des Überprüfens, ob die Datenquelle zumindest eine dem Musikstück zugeordnete Zeitangabe umfasst. Hierdurch kann der Benutzer vorteilhafterweise über den aktuellen Status des Vorgangs informiert werden und bei auf möglicherweise fehlende Angaben aufmerksam gemacht werden. Eine solche Rückmeldung kann beispielsweise durch eine zumindest manche Verfahrensschritte des erfindungsgemäßen Verfahrens oder einer seiner Ausgestaltungen ausführende Rechnereinrichtung oder einer Rechnereinrichtung, die mit einer zweiten zumindest manche Verfahrensschritte ausführenden Rechnereinrichtung in kommunikativer Verbindung steht, zum Beispiel über ein Netzwerk, ausgegeben werden. Die Ausgabe kann dabei akustisch, haptisch und/oder visuell erfolgen, zum Beispiel über eine Anzeige auf einem Display der Rechenreinrichtung des Benutzers. Auch können die gewonnenen Ergebnisse, zum Beispiel die ermittelten vorbestimmten Metadateneinheiten, Zeitangaben, die bei dem Rechteverwerte anzugebenen Dateneinheiten, die fertige Liste, usw. zur Weiterverarbeitung und/oder Weiterleitung an einer geeigneten Schnittstelle einer oder mehrere Rechnereinrichtungen bereitgestellt werden.

Gemäß einer weiteren vorteilhaften Ausgestaltung der Erfindung wird nach Erstellen der Liste, die Liste an den Benutzer ausgegeben, zum Bespiel auf einer Anzeigeeinrichtung oder einem Display der Rechnereinrichtung des Benutzers angezeigt, und insbesondere wird eine Eingabe des Benutzers empfangen, wobei in Abhängigkeit von der Eingabe die Liste geändert wird oder nicht. Dadurch kann zum einen der Benutzer vorteilhafterweise die Liste nochmals kontrollieren. Auch ist die Möglichkeit bereitgestellt, bestimmte Angaben in der Liste zu ändern beziehungsweise zu ergänzen. Sollte es beispielsweise der Fall sein, dass nicht alle beim Rechteverwerter anzugebenden Angaben automatisch ermittelt werden konnten und entsprechend Einträge in der Liste fehlen, so kann auch aktiv durch das System der Benutzer auf das Fehlen von Angaben hingewiesen werden. Beispielsweise kann der Benutzer vorteilhafterweise durch ein Ausgeben einer entsprechenden Warnmeldung, zum Beispiel durch die Rechnereinrichtung des Benutzers, auf ein Fehlen von Angaben oder auf zu überprüfende Angaben aufmerksam gemacht werden. Diesem ist entsprechend die Möglichkeit bereitgestellt, diese Angaben dann manuell in die Liste einzutragen und zu ergänzen oder zu korrigieren. Auch kann weiterhin dem Benutzer eine Bestätigungsmöglichkeit bereitgestellt sein, um die Richtigkeit der Liste zu bestätigen oder deren Vollständigkeit, woraufhin dann optional die Liste automatisch an den Rechteverwerter übermittelt wird, zum Beispiel an eine entsprechende Adresse eines durch den Rechteverwerter bereitgestellten Internetservers, einer Emailadresse, einer Postanschrift oder Ähnliches. Alternativ oder zusätzlich kann die Liste auch in einem Speicher einer dem Benutzer zugeordneten Rechnereinrichtung abgelegt werden.

Insgesamt wird so ein Verfahren bereitgestellt, welches eine enorme Zeitersparnis bei der Erstellung einer bei einem Rechteverwerter anzugebenden Liste ermöglicht und damit gerade für Film- und Fernsehproduktionsfirmen, Radioproduktionen und andere eine enorme Kostenersparnis ermöglicht. Dieses Verfahren ist somit deutlich weniger fehleranfällig.

Des Weiteren betrifft die Erfindung auch ein Netzwerk mit einer ersten Rechnereinrichtung und einer zweiten Rechnereinrichtung, wie zum Bespiel einer zentralen Datenverarbeitungseinrichtung, wobei das Netzwerk zur Ausführung eines erfindungsgemäßen Verfahrens ausgebildet ist.

Die erste Rechnereinrichtung weist ein erstes Computerprogrammprodukt auf. Die erste Rechnereinrichtung kann beispielsweise einen Speicher aufweisen, in welchem das erste Computerprogrammprodukt zum Beispiel in Form eines ersten Computerprogramms abgelegt ist, sowie einen Prozessor, der zum Ausführen des ersten Computerprogramms ausgelegt ist und der bei Ausführung des ersten Computerprogramms eine Ausführung der entsprechend nachfolgend beschriebenen Verfahrensschritte durch die erste Rechnereinrichtung bewirkt.

Das erste Computerprogrammprodukt ist dazu ausgelegt, bei Ausführung auf der ersten Rechnereinrichtung die erste Rechnereinrichtung dazu zu veranlassen, zu überprüfen, ob auf Basis einer auf der Rechnereinrichtung bereitgestellten Datenquelle, welche als ein Anwendungsprogramm, in welchem das mindestens eine erste Musikstück verwendet wurde, und/oder als eine Datei, welche einen Verweis auf das in einem Anwendungsprogramm verwendete mindestens eine erste Musikstück enthält, bereitgestellt ist, zumindest eine vorbestimmte Metadateneinheit, welche dem mindestens einen ersten Musikstück zugeordnet ist, ermittelbar ist, und für den Fall, dass die zumindest eine vorbestimmte Metadateneinheit ermittelbar ist, die zumindest eine vorbestimmte Metadateneinheit zu ermitteln und bereitzustellen.

Hierdurch lässt sich, wie zum erfindungsgemäßen Verfahren bereits beschrieben, eine automatische Ermittlung von Metadaten, die zur eindeutigen Identifikation eines Musikstücks genutzt werden können, bereitstellen. Auch unabhängig von einer automatischen Ermittlung zusätzlicher, bei dem Rechteverwerter anzugebender Dateninhalte wie Labelcode oder Artikelnummer, die automatisch aus einer Datenbank bezogen werden können, lassen sich hierdurch bereits enorme Zeitvorteile bei der Erstellung einer Liste für den Rechteverwerter erzielen und Fehler vermeiden. Die für das erfindungsgemäße Verfahren genannten Vorteile gelten somit zum Teil in gleicher Weise für das auf der ersten Rechnereinrichtung ausführbare erste Computerprogrammprodukt. Zudem kann das erste Computerprogrammprodukt optional auch dazu ausgelegt sein, die erste Rechnereinrichtung zu den weiteren, im Zusammenhang mit dem erfindungsgemäßen Verfahren und seinen Ausgestaltungen genannten Verfahrensschritten zu veranlassen.

Beispielsweise kann das auf der ersten Rechnereinrichtung ausführbare Computerprogrammprodukt dazu ausgelegt sein, bei Ausführung auf der ersten Rechnereinrichtung die erste Rechnereinrichtung dazu zu veranlassen, aus einer auf der ersten Rechnereinrichtung bereitgestellten Datenquelle, zum Beispiel der Exportdatei oder des Anwendungsprogramms, welche einen Pfad zu einer Quelldatei, in welcher mindestens ein erstes Musikstück in Form von Musikdaten gespeichert ist, beinhaltet, den Pfad auszulesen, unter der Voraussetzung, dass unter Verwendung des Pfads zu der Quelldatei die Quelldatei gefunden wird, auf die Quelldatei zuzugreifen und zu überprüfen, ob die Quelldatei zumindest eine vorbestimmte Metadateneinheit, welche dem mindestens einen ersten Musikstück zugeordnet ist, umfasst, und für den Fall, dass die Quelldatei die zumindest eine vorbestimmte Metadateneinheit umfasst, die zumindest eine vorbestimmte Metadateneinheit auszulesen und, insbesondere zur weiteren Verwendung, bereitzustellen, zum Beispiel die zumindest eine vorbestimmte Metadateneinheit an einer von der Rechnereinrichtung umfassten Kommunikationsschnittstelle zur Übermittlung der zumindest einen vorbestimmten Metadateneinheit an eine zentrale Datenverarbeitungseinrichtung bereitzustellen.

Weiterhin ist es vorteilhaft, jedoch nicht zwingend erforderlich, wenn lediglich die mit dem Sammeln der Metainformationen, d.h. die Metadateneinheiten, und der Zeitangaben im Zusammenhang stehenden Verfahrensschritte durch das Computerprogrammprodukt auf der ersten Rechnereinrichtung, wie beispielsweise dem Rechner eines Benutzers, ausgeführt werden, während die weitere Verwertung dieser gesammelten Metainformationen von der zweiten Rechnereinrichtung, zum Beispiel einer zentralen Datenverarbeitungseinrichtung, durchgeführt wird, da hierfür dann vorteilhafterweise die Rechenkapazitäten der zentralen Datenverarbeitungseinrichtung, sowie optional auch weitere Ressourcen wie z.B. Datenbanken, genutzt werden können und nicht die des Benutzerrechners genutzt werden müssen. Insbesondere können die einzelnen Verfahrensschritte des erfindungsgemäßen Verfahrens oder einer seiner Ausgestaltungen auf nur einer oder auch mehreren verschiedenen, insbesondere beliebig vielen, Rechnereinrichtungen ausgeführt werden, zum Beispiel manche der Verfahrensschritte auf einer Rechnereinrichtung eines Benutzers und manche andere Verfahrensschritte auf einer zentralen Datenverarbeitungseinrichtung.

Die zweite Rechnereinrichtung weist ein auf der zweiten Rechnereinrichtung ausführbares, zweites Computerprogrammprodukt auf. Auch diese zweite Rechnereinrichtung kann entsprechend einen Speicher, in welchem das betreffende zweite Computerprogrammprodukt in Form eines zweiten Computerprogramms abgelegt ist, aufweisen, sowie auch einen Prozessor zum Ausführen des zweiten Computerprogramms, der entsprechend bei Ausführung des zweiten Computerprogramms die Rechnereinrichtung zu den nachfolgend beschriebenen Verfahrensschritten veranlasst.

Das auf der zweiten Rechnereinrichtung, zum Beispiel einer zentralen Datenverarbeitungseinrichtung, ausführbare zweite Computerprogrammprodukt ist, wobei die zweite Rechnereinrichtung mit der ersten Rechnereinrichtung in kommunikativer Verbindung steht, dazu ausgelegt, bei Ausführung auf der zweiten Rechnereinrichtung die zweite Rechnereinrichtung dazu zu veranlassen, zumindest die vorbestimmte Metadateneinheit, welche dem zumindest einen ersten Musikstück zugeordnet ist, von der ersten Rechnereinrichtung zu empfangen, und eine kommunikative Verbindung zu einer Datenbank herzustellen, welche für eine Mehrzahl an zweiten Musikstücken jeweils mindestens eine zweite vorbestimmte Dateneinheit bezogen auf die jeweiligen zweiten Musikstücke bereitstellt, wobei den zweiten Musikstücken jeweils zumindest eine zweite Information zugeordnet ist, zu überprüfen, ob zumindest eines der zweiten Musikstücke mit dem mindestens einen ersten Musikstück auf Basis eines Vergleichs der zumindest einen Metadateneinheit des mindestens einen ersten Musikstücks mit der zumindest einen zweiten Information der jeweiligen zweiten Musikstücke identifizierbar ist, und falls das Überprüfen ergibt, dass zumindest eines der zweiten Musikstücke mit dem mindestens einen ersten Musikstück identifizierbar ist, die zweite vorbestimmte Dateneinheit des mit dem mindestens einen ersten Musikstück identifizierbaren zweiten Musikstücks als eine vorbestimmte, bei einem Rechteverwerter anzugebende Dateneinheit bezogen auf das erste Musikstück bereitzustellen.

Die in Bezug auf das erfindungsgemäße Verfahren genannten Vorteile gelten hier auch in gleicher Weise für das erfindungsgemäße Netzwerk. Darüber hinaus ermöglichen die in Bezug auf das erfindungsgemäße Verfahren und seine Ausgestaltungen beschriebenen, weiteren Verfahrensschritte eine entsprechende Weiterbildung des auf der zweiten Rechnereinrichtung ausführbaren Computerprogrammprodukts. Insbesondere können die oben beschriebenen Computerprogrammprodukte zu einem Computerprogrammprodukt kombiniert werden und auch auf ein und derselben Rechnereinrichtung ausgeführt werden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Dabei zeigen:
- Fig. 1: eine schematische Darstellung zur Veranschaulichung eines Verfahrens zum Ermitteln mindestens einer ersten vorbestimmten, bei einem Rechteverwerter anzugebenen Dateneinheit bezogen auf mindestens ein vorbestimmtes Musikstück gemäß einem Ausführungsbeispiel der Erfindung;
- Fig. 2: eine schematische Darstellung eines Netzwerks gemäß einem Ausführungsbeispiel der Erfindung;
- Fig. 3: ein Ablaufdiagramm zur Veranschaulichung eines Verfahrens zum Ermitteln mindestens einer vorbestimmten, bei einem Rechteverwerter anzugebenden Dateneinheit bezogen auf mindestens ein Musikstück gemäß einem weiteren Ausführungsbeispiel der Erfindung;
- Fig. 4: ein Ablaufdiagramm zur Veranschaulichung der von einem Clientanwendungsprogramm durchgeführten Verfahrensschritte gemäß einem Ausführungsbeispiel der Erfindung; und
- Fig. 5: ein Ablaufdiagramm zur Veranschaulichung der von einem Serveranwendungsprogramm durchgeführten Verfahrensschritte gemäß einem Ausführungsbeispiel der Erfindung.

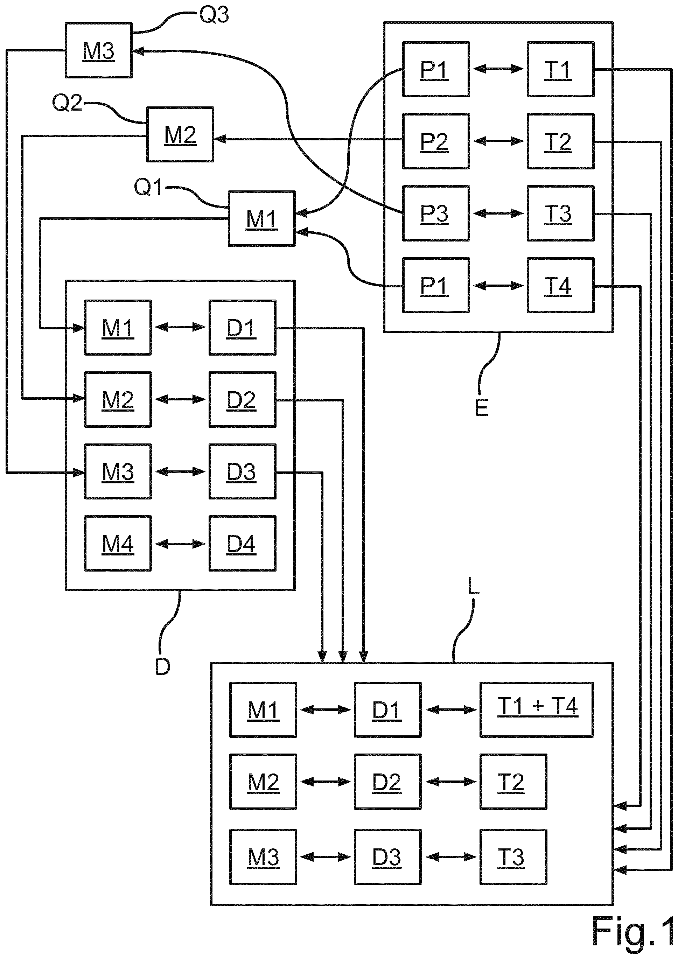

Fig. 1 zeigt eine schematische Darstellung zur Veranschaulichung eines Verfahrens zum Ermitteln mindestens einer vorbestimmten, bei einem Rechteverwerter anzugebenen Dateneinheit D1, D2, D3, D4 bezogen auf mindestens ein vorbestimmtes Musikstück, insbesondere zur automatisierten Erstellung einer bei dem Rechteverwerter anzugebenden Liste L, gemäß einem Ausführungsbeispiel der Erfindung.

Zunächst wird hierbei eine Datenquelle wie zum Beispiel eine Exportdatei E bereitgestellt. Diese kann beispielsweise als Ergebnis eines Video- und/oder Audioprogramms, insbesondere eines Video- und/oder Audiobearbeitungsprogramms wie beispielsweise eines Video- und/oder Audioschnittprogramms bereitgestellt sein. Als Datenquelle kann z.B. auch das Video- und/oder Audioprogramm selbst dienen. In den folgenden Beispielen wird von der Exportdatei als Datenquelle ausgegangen. Die Ausführungen gelten jedoch in gleicher Weise für das Anwendungsprogramm als Datenquelle.

Die Exportdatei E kann zum Beispiel für eines oder mehrere bei der Video- und/oder Audiobearbeitung verwendete Musikstücke einen Verweis auf die betreffenden Musikstücke in Form eines Pfads P1, P2, P3 zu jeweiligen Quelldateien Q1, Q2, Q3, in welchen die betreffenden Musikstücke in Form von Musikdaten gespeichert sind, enthalten. Optional kann die Exportdatei E für die jeweiligen Musikstücke auch entsprechende Zeitangaben wie beispielsweise Zeitdauern T1, T2, T3, T4 enthalten, die angeben, wie lange ein entsprechendes Musikstück im Video- und/oder Audioprojekt verwendet wurde. Wurde ein Musikstück während eines solchen Projekts beispielsweise des Öfteren verwendet, so wird auch der Pfad P1, P2, P3 zur Quelldatei Q1, Q2, Q3 in der Exportdatei E entsprechend häufig aufgelistet, wie in diesem Beispiel anhand des Pfads P1 veranschaulicht, wobei dann weiterhin die entsprechenden Zeitdauern T1, T2, T3, T4 für jeweils eine Verwendung im Video- und/oder Audioprojekt angegeben sind. In den Quelldateien Q1, Q2, Q3 sind neben den entsprechenden Musikdaten noch weitere Metainformationen bzw. Metadateneinheiten M1, M2, M3 für die jeweiligen Musikstücke gespeichert. Derartige Metainformationen bzw. Metadateneinheiten M1, M2, M3 sind beispielsweise Titel und Interpret beziehungsweise Komponist der betreffenden Musikstücke. Weitere Metainformationen bzw. Metadateneinheiten M1, M2, M3 können auch beispielsweise das Album darstellen, auf welchem das entsprechende Musikstück veröffentlicht wurde. Die in der Exportdatei E angegebenen Pfade P1, P2, P3 können nun vorteilhafterweise verwendet werden, um weitere Informationen über die betreffenden Musikstücke in Erfahrung zu bringen. Hierzu werden die jeweiligen Pfade P1, P2, P3 verwendet, um auf die jeweiligen Quelldateien Q1, Q2, Q3 zuzugreifen und daraus die darin enthaltenen Metainformationen bzw. Metadateneinheiten M1, M2, M3 auszulesen. Durch diese Metainformationen bzw. Metadateneinheiten M1, M2, M3 können die betreffenden Musikstücke zuverlässiger identifiziert werden, sodass es nun vorteilhafterweise möglich ist, in einer oder mehreren Datenbanken D nach den identifizierten Musikstücken zu suchen und die zu diesen Musikstücken zusätzlich angegebenen Informationen wie Labelcode, Artikelnummer usw., die bei einem Rechteverwerter anzugeben sind, zu ermitteln. Die aus den Quelldateien Q1, Q2, Q3 ausgelesenen Metainformationen bzw. Metadateneinheiten M1, M2, M3 wie beispielsweise Titel und Interpret werden dabei entsprechend mit in den Datenbanken D enthaltenen Titeln und Interpreten, die in Fig. 1 ebenfalls mit M1, M2, M3, M4 bezeichnet sind, verglichen. Bei einer Übereinstimmung können dann entsprechend aus den Datenbanken D die zu den korrespondierenden Musikstücken angegebenen weiteren Dateneinheiten D1, D2, D3, D4 für die identifizierten Musikstücke ausgelesen werden. Darauf basierend kann nun vorteilhafterweise eine Liste L erstellt werden, die die bei dem Rechteverwerter anzugebenden Informationen umfasst. Für ein jeweiliges Musikstück werden dazu zum einen Interpret und Titel angegeben, welche durch die Metainformationen bzw. Metadateneinheiten M1, M2, M3 bereitgestellt sind, die korrespondierenden und aus den Datenbanken D ermittelten Dateneinheiten D1, D2, D3 wie beispielsweise Labelcode, Artikelnummer usw. sowie auch zusätzlich die Gesamtzeitdauern T1+T4, T2, T3. Diese Zeitdauern können aus der Exportdatei E ermittelt werden, wobei bei mehrfacher Verwendung eines Musikstücks die jeweiligen Zeitdauern, wie in diesem Beispiel T1 und T4, summiert werden können.

Für den Fall, dass manche Angaben unvollständig sind oder komplett fehlen, kann vorteilhafterweise auch eine Bearbeitungsmöglichkeit dieser Liste L für den Benutzer bereitgestellt werden, um die Liste L manuell zu ergänzen. Auch für den Fall, dass die Identifikation der Musikstücke in den Datenbanken D nicht eindeutig ist, können einem Benutzer beispielsweise die ermittelten potentiellen Kandidaten zur Auswahl bereitgestellt werden.

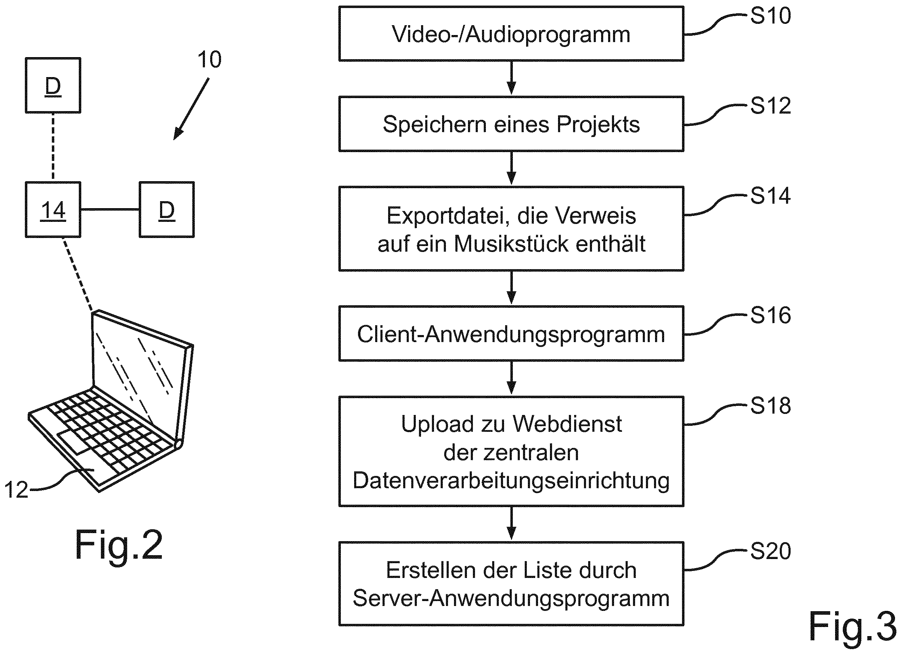

Fig. 2 zeigt eine schematische Darstellung eines Netzwerks 10 gemäß einem Ausführungsbeispiel der Erfindung. Das Netzwerk 10 umfasst dabei eine Rechnereinrichtung 12 mit einem Clientanwendungsprogramm und eine zentrale Datenverarbeitungseinrichtung 14 mit einem Serveranwendungsprogramm. Erstellt beispielsweise ein Benutzer an der Rechnereinrichtung 12 ein Schnittprojekt, so können die dabei verwendeten Musikstücke als Exportdatei E exportiert und auf der Rechnereinrichtung 12 bereitgestellt werden. Diese Exportdatei E kann dann entsprechend dem Clientanwendungsprogramm auf der Rechnereinrichtung 12 übergeben werden. Dieses Clientanwendungsprogramm nutzt dann entsprechend die in der Exportdatei E angegebenen Pfade P1, P2, P3, um - wie zu Fig. 1 bereits beschrieben - zu den jeweiligen Musikstücken entsprechende Metadaten aus den durch die Pfade referenzierten Quelldateien Q1, Q2, Q3 auszulesen. Diese Quelldateien Q1, Q2, Q3 können beispielsweise auf einer Festplatte der Rechnereinrichtung gespeichert sein, auf einer CD, einem USB-Stick usw. oder auch in einem Internetspeicher wie beispielsweise der Cloud usw. Wenn nun unter Verwendung aller der in der Exportdatei E angegebenen Pfade die jeweiligen Metadateneinheiten M1, M2, M3, sowie optional auch die zugehörigen Gesamtzeitdauern T1+T4, T2, T3 für die jeweiligen Musikstücke, ermittelt wurden, werden nun all diese gesammelten Daten an einer Kommunikationsschnittstelle der Rechnereinrichtung 12 bereitgestellt. Das Clientanwendungsprogramm veranlasst schließlich die Rechnereinrichtung 12 zum Übermitteln der ermittelten Metadaten M1, M2, M3, sowie optional auch der Gesamtzeitdauern T1+T4, T2, T3, an die zentrale Datenverarbeitungseinrichtung 14. Alternativ kann das Clientanwendungsprogramm die gesammelten Daten in irgendeiner beliebigen Form, zum Beispiel in einer Datei, bereitstellen. Ein Benutzer kann nun diese Datei manuell der zentralen Datenverarbeitungseinrichtung 14 zur Verfügung stellen, zum Beispiel an diese senden. Auch ist hierdurch die Möglichkeit bereitgestellt diese Datei an weitere Benutzer bzw. an Rechnereinrichtungen weiterer Benutzer zu übermitteln, die ihrerseits bei Bedarf diese Datei zur weiteren Verarbeitung an die zentrale Datenverarbeitungseinrichtung übermitteln können. Die zentrale Datenverarbeitungseinrichtung 14 kann dabei entweder auf interne Datenbanken D zugreifen oder auch externe Datenbanken D, zum Beispiel über eine Internetverbindung, nutzen, um nun anhand der Metainformationen bzw. Metadateneinheiten M1, M2, M3 nach zusätzlichen und bei dem Rechteverwerter anzugebenden Daten zu suchen. Die aus diesen Datenbanken D ermittelten Daten werden für die jeweiligen Musikstücke zusammen mit den Metainformationen bzw. Metadateneinheiten M1, M2, M3 und gegebenenfalls weiteren Informationen wie beispielsweise Gesamtzeitdauern T1+T4, T2, T3 in einer Liste L abgelegt, insbesondere durch die zentrale Datenverarbeitungseinrichtung 14. Weiterhin kann der Benutzer über die Rechnereinrichtung 12 zum Beispiel auf eine durch die zentrale Datenverarbeitungseinrichtung 14 bereitgestellte Website auf diese erstellte Liste L zugreifen und diese beispielsweise bearbeiten oder ergänzen.

Fig. 3 zeigt ein Ablaufdiagramm zur Veranschaulichung eines Verfahrens zum automatischen Ermitteln einer bei einem Rechteverwerter anzugebenden Dateneinheit D1, D2, D3, D4 gemäß einem weiteren Ausführungsbeispiel der Erfindung. Gemäß diesem Beispiel wird in S10 mit einem Video- und/oder Audioprogramm ein Projekt wie beispielsweise ein Schnittprojekt erstellt. Dieses Schnittprojekt wird in S12 gespeichert. Dabei wird in S14 eine Exportdatei E ausgegeben, die in Form von Pfaden P1, P2, P3 zu Quelldateien Q1, Q2, Q3 Verweise auf Musikstücke enthält, die in dem Projekt verwendet wurden. Diese Exportdatei E wird in S16 an ein Clientanwendungsprogramm übergeben, welches unter Verwendung der in der Exportdatei E angegebenen Pfade P1, P2, P3 auf die betreffenden Quelldateien Q1, Q2, Q3 zugreift, um daraus für die jeweiligen Musikstücke Metadateneinheiten M1, M2, M3 zu ermitteln. Diese können entsprechend über einen Webdienst in S18 an die zentrale Datenverarbeitungseinrichtung 14 übergeben werden. In S20 sucht diese nun in entsprechenden Datenbanken D nach weiterführenden Informationen wie Labelcode, Artikelnummer usw. zu den entsprechenden, durch die an die zentrale Datenverarbeitungseinrichtung 14 übergebenen Metainformationen bzw. Metadateneinheiten M1, M2, M3 identifizierbaren Musikstücken. Die gesammelten Informationen können dann in einer Liste L abgelegt und dem Benutzer zur Bearbeitung bereitgestellt werden.

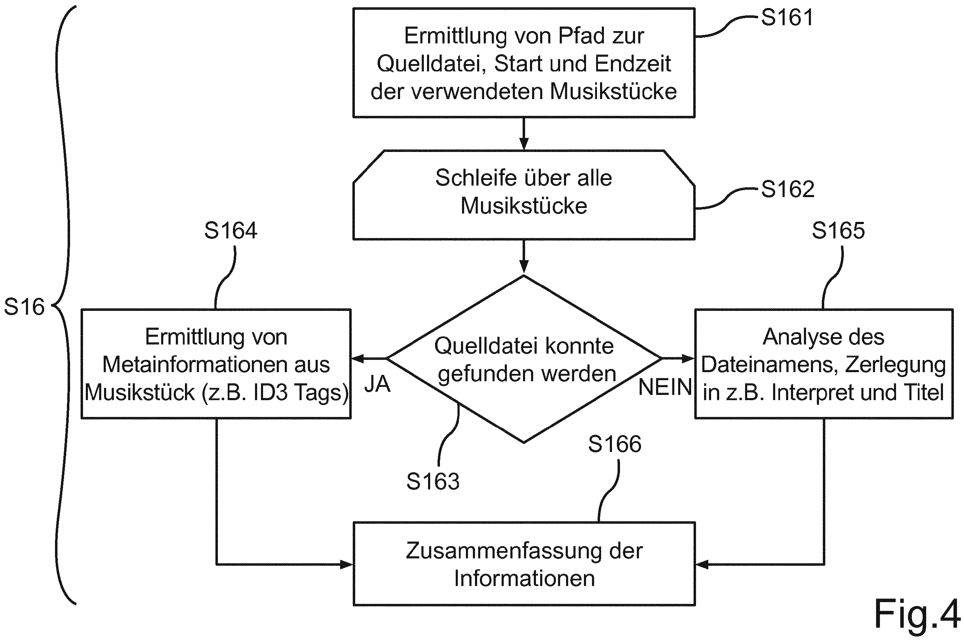

Fig. 4 zeigt ein Ablaufdiagramm zur Veranschaulichung der vom Clientanwendungsprogramm ausgeführten Verfahrensschritte in S16 gemäß Fig. 3. Dieses Clientanwendungsprogramm ermittelt hierzu aus der Exportdatei E zunächst in S161 den Pfad P1, P2, P3 zur Quelldatei Q1, Q2, Q3 sowie Start- und Endzeit oder Zeitdauer T1, T2, T3, T4 der jeweiligen verwendeten Musikstücke. Dies wird insbesondere für alle Musikstücke als Schleife in S162 durchgeführt, für welche die Exportdatei E entsprechende Verweise enthält. Weiterhin wird in S163 überprüft, ob anhand der ermittelten Pfade P1, P2, P3 die betreffenden Quelldateien Q1, Q2, Q3 gefunden werden konnten. Ist dies der Fall, so werden in S164 aus den Quelldateien Q1, Q2, Q3 die zu den jeweiligen Musikstücken enthaltenen Metainformationen bzw. Metadateneinheiten M1, M2, M3, zum Beispiel aus ID3-Tags, ermittelt. Ergibt die Überprüfung in S163 jedoch, dass die Quelldatei Q1, Q2, Q3 nicht gefunden werden konnte, so erfolgt in S165 eine Analyse des Dateinamens, d.h. des in der Exportdatei E für den Pfad P1, P2, P3 angegebenen Namens, welcher beispielsweise in Interpret und Titel zerlegt werden kann.

Diese aus dem Dateinamen extrahierten Informationen dienen damit ebenfalls als Metainformationen bzw. Metadateneinheiten M1, M2, M3 zu den betreffenden Musikstücken. Schließlich werden in S166 die ermittelten Informationen zusammengefasst.

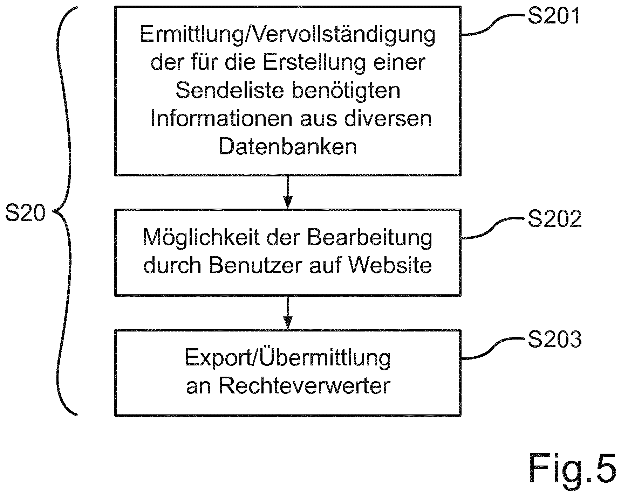

Fig. 5 zeigt ein Ablaufdiagramm zur Veranschaulichung der vom Serveranwendungsprogramm auf der zentralen Datenverarbeitungseinrichtung 14 durchgeführten Verfahrensschritte gemäß einem Ausführungsbeispiel der Erfindung. Insbesondere werden hierbei die in S20 gemäß Fig. 3 durchgeführten Schritte detaillierter dargestellt. Nachdem also die in S166 gemäß Fig. 4 zusammengefassten Informationen an die zentrale Datenverarbeitungseinrichtung 14 übermittelt wurden, werden diese Informationen in S201 für die Erstellung der Liste L vervollständigt. Hierzu wird auf externe oder interne Datenbanken D wie beispielsweise Discogs, Datenbanken der Musiklabels usw. oder auch interne Datenbanken D zugegriffen, um für die betreffenden Musikstücke Angaben wie beispielsweise Labelcode, Artikelnummer usw. zu ermitteln. Die gesuchten Musikstücke können dabei anhand der an die zentrale Datenverarbeitungseinrichtung 14 übermittelten Metainformationen bzw. Metadateneinheiten M1, M2, M3 identifiziert werden und dadurch mit den in den Datenbanken D enthaltenen Musikstücken abgeglichen werden. Die Ergebnisse dieser Vervollständigung können in S202 einem Benutzer zur Bearbeitung bereitgestellt werden. Dies kann über eine entsprechende Website erfolgen, auf die der Benutzer der Rechnereinrichtung 12 zugreifen kann. Fehlende Informationen können dadurch ergänzt werden. Sollten beispielsweise Musikstücke in den Datenbanken D nicht eindeutig identifizierbar gewesen sein, kann dem Benutzer auch hier beispielsweise eine Auswahl bereitgestellt werden, aus welcher der Benutzer das richtige Musikstück auswählen kann. Ist die Liste L vollständig, so kann dies durch den Benutzer bestätigt werden. Letztendlich wird dann in S203 die fertiggestellte Liste L exportiert, zum Beispiel wieder an die Rechnereinrichtung 12 übermittelt oder direkt an den Rechteverwerter gesendet.

Insbesondere wird es so durch die Erfindung und ihre Ausgestaltungen ermöglicht, auf automatische und enorm zeitsparende Weise mit wenigen Clicks Listen für die Einreichung bei einem Rechteverwerter, wie beispielsweise der GEMA zu erstellen und zu verwalten.

## Patentansprüche

1. Verfahren zum Ermitteln mindestens einer ersten vorbestimmten bei einem Rechteverwerter anzugebenden Dateneinheit (D1, D2, D3, D4) bezogen auf mindestens ein vorbestimmtes erstes Musikstück, mit den Schritten:
a) Bereitstellen einer Datenquelle (E);
b) Erstes Überprüfen, ob auf Basis der Datenquelle (E) zumindest eine vorbestimmte Metadateneinheit (M1, M2, M3), welche dem mindestens einen ersten Musikstück zugeordnet ist, ermittelbar ist;
c) Herstellen einer kommunikativen Verbindung zu einer Datenbank (D), welche für eine Mehrzahl an zweiten Musikstücken jeweils mindestens eine zweite vorbestimmte Dateneinheit (D1, D2, D3, D4) bezogen auf die jeweiligen zweiten Musikstücke bereitstellt, wobei den zweiten Musikstücken jeweils zumindest eine zweite Information (M1, M2, M3, M4) zugeordnet ist;
d) Falls das erste Überprüfen in b) ergibt, dass die zumindest eine vorbestimmte Metadateneinheit (M1, M2, M3) ermittelbar ist, Ermitteln der zumindest einen vorbestimmten Metadateneinheit (M1, M2, M3) und zweites Überprüfen, ob zumindest eines der zweiten Musikstücke mit dem mindestens einen ersten Musikstück identifizierbar ist, wobei das zweite Überprüfen auf Basis eines Vergleichs der zumindest einen Metadateneinheit (M1, M2, M3) des mindestens einen ersten Musikstücks mit der zumindest einen zweiten Information (M1, M2, M3, M4) der jeweiligen zweiten Musikstücke erfolgt;
e) Falls das zweite Überprüfen in d) ergibt, dass zumindest eines der zweiten Musikstücke mit dem mindestens einen ersten Musikstück identifizierbar ist, Bereitstellen der zweiten vorbestimmten Dateneinheit (D1, D2, D3, D4) des mit dem mindestens einen ersten Musikstück identifizierbaren zweiten Musikstücks als die vorbestimmte, bei dem Rechteverwerter anzugebende Dateneinheit (D1, D2, D3, D4) bezogen auf das erste Musikstück;
**dadurch gekennzeichnet, dass**
als Datenquelle (E) ein Anwendungsprogramm, in welchem das mindestens eine erste Musikstück verwendet wurde, und/oder eine Datei, welche einen Verweis auf das in einem Anwendungsprogramm verwendete mindestens eine erste Musikstück enthält, bereitgestellt wird.

2. Verfahren nach einem der vorhergehenden Ansprüche,
**dadurch gekennzeichnet, dass**
das erste Überprüfen beinhaltet, dass überprüft wird, ob die Datenquelle (E) die zumindest eine vorbestimmte Metadateneinheit (M1, M2, M3) enthält.

3. Verfahren nach einem der vorhergehenden Ansprüche,
**dadurch gekennzeichnet, dass**
das erste Überprüfen beinhaltet, dass überprüft wird, ob die Datenquelle (E) einen Pfad (P1, P2, P3) zu einer Quelldatei (Q1, Q2, Q3), in welcher das mindestens eine erste Musikstück in Form von Musikdaten gespeichert ist, beinhaltet, wobei für den Fall, dass die Datenquelle (E) den Pfad (P1, P2, P3) beinhaltet, und unter der Voraussetzung, dass unter Verwendung des Pfads (P1, P2, P3) zur Quelldatei (Q1, Q2, Q3) die Quelldatei (Q1, Q2, Q3) gefunden wird, auf die Quelldatei (Q1, Q2, Q3) zugegriffen wird und überprüft wird, ob die Quelldatei (Q1, Q2, Q3) die zumindest eine vorbestimmte Metadateneinheit (M1, M2, M3) umfasst.

4. Verfahren nach einem der vorhergehenden Ansprüche,
**dadurch gekennzeichnet, dass**
- die mindestens eine vorbestimmte bei dem Rechteverwerter anzugebene Dateneinheit (D1, D2, D3, D4) und die zumindest eine zweite vorbestimmte Dateneinheit (D1, D2, D3, D4) jeweils einen Labelcode und/oder eine Artikelnummer eines Albums darstellen; und/oder
- die zumindest eine vorbestimmte Metadateneinheit (M1, M2, M3) und die zumindest eine zweite Information (M1, M2, M3, M4) jeweils einen Titel und/oder Interpreten darstellen.

5. Verfahren nach einem der vorhergehenden Ansprüche,
**dadurch gekennzeichnet, dass**
das erste Überprüfen beinhaltet, dass überprüft wird, ob die Datenquelle (E) einen Pfad (P1, P2, P3) zu einer Quelldatei (Q1, Q2, Q3), in welcher das mindestens eine erste Musikstück in Form von Musikdaten gespeichert ist, beinhaltet, wobei für den Fall, dass die Datenquelle (E) den Pfad (P1, P2, P3) beinhaltet, eine Analyse eines für den Pfad (P1, P2, P3) in der Datenquelle (E) angegebenen Namens durchgeführt wird und ein drittes Überprüfen erfolgt, gemäß welchem überprüft wird, ob der Name zumindest einen Teil der mindestens einen vorbestimmten Metadateneinheit (M1, M2, M3) umfasst.

6. Verfahren nach einem der Ansprüche 3 bis 5,
**dadurch gekennzeichnet, dass**
nur für den Fall, dass die Quelldatei (Q1, Q2, Q3) unter Verwendung des Pfads (P1, P2, P3) nicht gefunden wird, oder falls das Überprüfen ergibt, dass die Quelldatei (Q1, Q2, Q3) die zumindest eine vorbestimmte Metadateneinheit (M1, M2, M3) nicht umfasst, eine Analyse eines für den Pfad (P1, P2, P3) angegebenen Namens durchgeführt wird und ein drittes Überprüfen erfolgt, gemäß welchem überprüft wird, ob der Name zumindest einen Teil der mindestens einen vorbestimmten Metadateneinheit (M1, M2, M3) umfasst.

7. Verfahren nach einem der Ansprüche 5 oder 6,
**dadurch gekennzeichnet, dass**
für den Fall, dass das dritte Überprüfen ergibt, dass der Name zumindest einen Teil der mindestens einen vorbestimmten Metadateneinheit umfasst, das zweite Überprüfen auf Basis eines Vergleichs des zumindest einen Teils der mindestens einen vorbestimmten Metadateneinheit (M1, M2, M3) des mindestens einen ersten Musikstücks mit der zumindest einen zweiten Information (M1, M2, M3, M4) der jeweiligen zweiten Musikstücke erfolgt, insbesondere wobei weiterhin Schritt d) ausgeführt wird.

8. Verfahren nach einem der vorhergehenden Ansprüche,
**dadurch gekennzeichnet, dass**
eine Liste (L) erstellt wird, die für das mindestens eine erste Musikstück die mindestens eine vorbestimmte Metadateneinheit (M1, M2, M3) und die mindestens eine erste vorbestimmte Dateneinheit (D1, D2, D3, D4) umfasst.

9. Verfahren nach einem der vorhergehenden Ansprüche,
**dadurch gekennzeichnet, dass**
überprüft wird, ob die Datenquelle (E) zumindest eine dem Musikstück zugeordnete Zeitangabe (T1, T2, T3, T4), insbesondere eine Angabe über einen Anfangszeitpunkt und einen Endzeitpunkt oder eine Zeitdauer (T1, T2, T3, T4), aus welcher eine Gesamtzeitdauer (T1+T4, T2, T3) ermittelt wird, umfasst, wobei für den Fall, dass dem so ist, die Zeitangabe (T1, T2, T3, T4) ausgelesen wird, insbesondere wobei für den Fall, dass die bereitgestellte Datenquelle (E) mehrere dem mindestens einen ersten Musikstück zugeordnete Zeitangaben (T1, T2, T3, T4) mehrfach aufweist, eine Gesamtzeitdauer (T1+T4, T2, T3) aus den jeweiligen Zeitangaben (T1, T2, T3, T4) ermittelt wird.

10. Verfahren nach Anspruch 10,
**dadurch gekennzeichnet, dass**
die Gesamtzeitdauer (T1, T2, T3, T4) für das mindestens eine erste Musikstück in der Liste (L) abgelegt wird.

11. Verfahren nach einem der vorhergehenden Ansprüche,
**dadurch gekennzeichnet, dass**
falls das zweite Überprüfen ergibt, dass keine der zweiten Musikstücke mit dem mindestens einen ersten Musikstück eindeutig identifizierbar ist, Ermitteln von für eine Identifikation in Frage kommender Kandidaten aus den zweiten Musikstücken und Ausgeben der Kandidaten über eine Benutzerschnittstelle an einen Benutzer und Bereitstellen einer Auswahlmöglichkeit für den Benutzer zur Auswahl eines der Kandidaten.

12. Verfahren nach einem der Ansprüche 8 bis 11,
**dadurch gekennzeichnet, dass**
nach Erstellen der Liste (L), die Liste (L) an einen Benutzer ausgegeben wird und eine Eingabe des Benutzers empfangen wird und in Abhängigkeit von der Eingabe die Liste (L) geändert wird oder nicht.

13. Netzwerk mit einer ersten Rechnereinrichtung und einer zweiten Rechnereinrichtung, wobei das Netzwerk zur Ausführung eines Verfahrens nach einem der vorhergehenden Ansprüche ausgebildet ist.

## Claims

1. A method for ascertaining at least one first predetermined data unit (D1, D2, D3, D4) to be indicated at an exploiter of rights related to at least one predetermined first piece of music, including the steps of:
a) providing a data source (E);
b) first examination if at least one predetermined metadata unit (M1, M2, M3) associated with the at least one first piece of music can be ascertained based on the data source (E);
c) establishing a communicative link to a database (D), which respectively provides at least one second predetermined data unit (D1, D2, D3, D4) related to respective second pieces of music for a plurality of the second pieces of music, wherein at least one second information (M1, M2, M3, M4) is respectively associated with the second pieces of music;
d) if the first examination in b) yields that the at least one predetermined metadata unit (M1, M2, M3) can be ascertained, ascertaining the at least one predetermined metadata unit (M1, M2, M3) and second examination if at least one of the second pieces of music is identifiable with the at least one first piece of music, wherein the second examination is effected based on a comparison of the at least one metadata unit (M1, M2, M3) of the at least one first piece of music to the at least one second information (M1, M2, M3, M4) of the respective second pieces of music;
e) if the second examination in d) yields that at least one of the second pieces of music is identifiable with the at least one first piece of music, providing the second predetermined data unit (D1, D2, D3, D4) of the second piece of music identifiable with the at least one first piece of music as the predetermined data unit (D1, D2, D3, D4) to be indicated at the exploiter of rights related to the first piece of music;
**characterized in that**
an application program, in which the at least one first piece of music was used, and/or a file, which contains a reference to the at least one first piece of music used in an application program is provided as the data source (E).

2. The method according to any one of the preceding claims,
**characterized in that**
the first examination involves that it is examined if the data source (E) contains the at least one predetermined metadata unit (M1, M2, M3).

3. The method according to any one of the preceding claims,
**characterized in that**
the first examination involves that it is examined if the data source (E) includes a path (P1, P2, P3) to a source file (Q1, Q2, Q3), in which the at least one first piece of music is stored in the form of music data, wherein in case that the data source (E) includes the path (P1, P2, P3), and on condition that the source file (Q1, Q2, Q3) can be found using the path (P1, P2, P3) to the source file (Q1, Q2, Q3), the source file (Q1, Q2, Q3) is accessed and it is examined if the source file (Q1, Q2, Q3) includes the at least one predetermined metadata unit (M1, M2, M3).

4. The method according to any one of the preceding claims,
**characterized in that**
- the at least one predetermined data unit (D1, D2, D3, D4) to be indicated at the exploiter of rights and the at least one second predetermined data unit (D1, D2, D3, D4) each represent a label code and/or an item number of an album; and/or
- the at least one predetermined metadata unit (M1, M2, M3) and the at least one second information (M1, M2, M3, M4) each represent a title and/or an artist.

5. The method according to any one of the preceding claims,
**characterized in that**
the first examination involves that it is examined if the data source (E) includes a path (P1, P2, P3) to a source file (Q1, Q2, Q3), in which the at least one first piece of music is stored in the form of music data, wherein in case that the data source (E) includes the path (P1, P2, P3), an analysis of a name indicated in the data source (E) for the path (P1, P2, P3) is performed and a third examination is effected, according to which it is examined if the name includes at least a part of the at least one predetermined metadata unit (M1, M2, M3).

6. The method according to any one of claims 3 to 5,
**characterized in that**
only in case that the source file (Q1, Q2, Q3) is not found using the path (P1, P2, P3), or if the examination yields that the source file (Q1, Q2, Q3) does not include the at least one predetermined metadata unit (M1, M2, M3), an analysis of a name indicated for the path (P1, P2, P3) is performed and a third examination is effected, according to which it is examined if the name includes at least a part of the at least one predetermined metadata unit (M1, M2, M3).

7. The method according to any one of claims 5 or 6,
**characterized in that**
in case that the third examination yields that the name includes at least a part of the at least one predetermined metadata unit, the second examination is effected based on a comparison of the at least one part of the at least one predetermined metadata unit (M1, M2, M3) of the at least one first piece of music to the at least one second information (M1, M2, M3, M4) of the respective second pieces of music, wherein in particular step d) is further executed.

8. The method according to any one of the preceding claims,
**characterized in that**
a list (L) is created, which includes the at least one predetermined metadata unit (M1, M2, M3) and the at least one first predetermined data unit (D1, D2, D3, D4) for the at least one first piece of music.

9. The method according to any one of the preceding claims,
**characterized in that**
it is examined if the data source (E) includes at least one time specification (T1, T2, T3, T4) associated with the piece of music, in particular a specification of a start point of time and an end point of time and a period of time (T1, T2, T3, T4), from which an overall period of time (T1+T4, T2, T3) is ascertained, wherein in case that this is the case, the time specification (T1, T2, T3, T4) is read out, wherein in particular in case that the provided data source (E) multiply comprises multiple time specifications (T1, T2, T3, T4) associated with the at least one first of piece of music, an overall period of time (T1+T4, T2, T3) is ascertained from the respective time specifications (T1, T2, T3, T4).

10. The method according to claim 10,
**characterized in that**
the overall period of time (T1, T2, T3, T4) for the at least one first piece of music is stored in the list (L).

11. The method according to any one of the preceding claims,
**characterized in that**
if the second examination yields that none of the second pieces of music is uniquely identifiable with the at least one first piece of music, ascertaining candidates contemplable for an identification from the second pieces of music and outputting the candidates to a user via a user interface and providing a possibility of selection for the user for selecting one of the candidates.

12. The method according to any one of claims 8 to 11,
**characterized in that**
after creating the list (L), the list (L) is output to a user and an input of the user is received and the list (L) is changed or not depending on the input.

13. A network with a first computer device and a second computer device, wherein the network is formed for executing a method according to any one of the preceding claims.

## Revendications

1. Procédé de détermination au moins d'une première unité de données prédéfinie (D1, D2, D3, D4), à indiquer auprès d'un exploitant de droit, par rapport à au moins un premier morceau de musique prédéfini, avec les étapes suivantes :
a) mise à disposition d'une source de données (E) ;
b) première vérification si, sur la base de la source de données (E), au moins une unité de métadonnées prédéfinie (M1, M2, M3), laquelle est affectée au au moins un premier morceau de musique, peut être déterminée ;
c) élaboration d'une liaison de communication avec une base de données (D), laquelle met à disposition, pour une pluralité de seconds morceaux de musique, respectivement au moins une seconde unité de données prédéfinie (D1, D2, D3, D4) par rapport aux respectivement seconds morceaux de musique, moyennant quoi respectivement au moins une seconde information (M1, M2, M3, M4) est affectée aux seconds morceaux de musique ;
d) au cas où la première vérification en b) indique que la au moins une unité de métadonnées prédéfinie (M1, M2, M3) peut être déterminée, détermination de la au moins une unité de métadonnées prédéfinie (M1, M2, M3) et deuxième vérification sur la question qui est de savoir si au moins l'un des seconds morceaux de musique peut être identifié avec le au moins un premier morceau de musique, la deuxième vérification se produisant sur la base d'une comparaison de la au moins une unité de métadonnées (M1, M2, M3) du au moins un premier morceau de musique avec la au moins une seconde information (M1, M2, M3, M4) des seconds morceaux de musique respectifs ;
e) si la deuxième vérification en d) indique qu'au moins l'un des seconds morceaux de musique peut être identifié avec le au moins un premier morceau de musique, mise à disposition de la seconde unité de données prédéfinie (D1, D2, D3, D4) du second morceau de musique, pouvant être identifié avec le au moins un premier morceau de musique, comme étant l'unité de données prédéfinie (D1, D2, D3, D4) prédéfinie, à indiquer auprès de l'exploitant de droits, par rapport au premier morceau de musique ;
**caractérisé en ce**
**qu'**un programme d'application, dans lequel le au moins un premier morceau de musique a été utilisé et / ou un fichier, lequel contient une référence au au moins un premier morceau de musique, utilisé dans un programme d'application, est mis à disposition en tant que source de données (E).

2. Procédé selon l'une des revendications précédentes,
**caractérisé en ce que**
la première vérification implique qu'il soit vérifié si la source de données (E) contient la au moins une unité de métadonnées prédéfinie (M1, M2, M3).

3. Procédé selon l'une des revendications précédentes,
**caractérisé en ce que**
la première vérification implique qu'il soit vérifié si la source de données (E) contient un chemin (P1, P2, P3) vers un fichier source (Q1, Q2, Q3), dans lequel est sauvegardé le au moins un premier morceau de musique sous forme de données musicales, moyennant quoi, au cas où la source de données (E) contient le chemin (P1, P2, P3) et à condition qu'en utilisant le chemin (P1, P2, P3) vers le fichier source (Q1, Q2, Q3), le fichier source (Q1, Q2, Q3) soit trouvé, il est accédé au fichier source (Q1, Q2, Q3) et il est vérifié si le fichier source (Q1, Q2, Q3) comprend la au moins une unité de métadonnées prédéfinie (M1, M2, M3).

4. Procédé selon l'une des revendications précédentes,
**caractérisé en ce que**
- la au moins une unité de données prédéfinie (D1, D2, D3, D4), à indiquer auprès de l'exploitant de droits et la au moins une seconde unité de données prédéfinie (D1, D2, D3, D4) représentent respectivement un code label et / ou un numéro d'article d'un album et / ou
- la au moins une unité de métadonnées prédéfinie (M1, M2, M3) et la au moins une seconde information (M1, M2, M3, M4) représentent respectivement un titre et / ou un interprète.

5. Procédé selon l'une des revendications précédentes,
**caractérisé en ce que**
la première vérification implique qu'il soit vérifié si la source de données (E) contient un chemin (P1, P2, P3) vers un fichier source (Q1, Q2, Q3), dans lequel est sauvegardé le au moins un premier morceau de musique sous forme de données musicales, moyennant quoi, au cas où la source de données (E) contient le chemin (P1, P2, P3), une analyse d'un nom, indiqué dans la source de données (E), est effectuée pour le chemin (P1, P2, P3) et une troisième vérification se produit, conformément à laquelle il est vérifié si le nom comprend au moins une partie de la au moins une unité de métadonnées prédéfinie (M1, M2, M3).

6. Procédé selon l'une des revendications 3 à 5,
**caractérisé en ce que**,
uniquement au cas où le fichier source (Q1, Q2, Q3) n'est pas trouvé en utilisant le chemin (P1, P2, P3) ou où la vérification indique que le fichier source (Q1, Q2, Q3) ne comprend pas la au moins une unité de métadonnées prédéfinie (M1, M2, M3), une analyse d'un nom, indiqué pour le chemin (P1, P2, P3), est effectuée et une troisième vérification se produit, conformément à laquelle il est vérifié si le nom comprend au moins une partie de la au moins une unité de métadonnées prédéfinie (M1, M2, M3).

7. Procédé selon l'une des revendications 5 ou 6,
**caractérisé en ce que**,
au cas où la troisième vérification se produit, que le nom comprend au moins une partie de la au moins une unité de métadonnées prédéfinie, la deuxième vérification se produit sur la base d'une comparaison de la au moins une partie de la au moins une unité de métadonnées prédéfinie (M1, M2, M3) du au moins un premier morceau de musique avec la au moins une seconde information (M1, M2, M3, M4) des seconds morceaux de musique respectifs, en particulier l'étape d) étant en outre exécutée.

8. Procédé selon l'une des revendications précédentes,
**caractérisé en ce**
**qu'**une liste (L) est établie, qui comprend, pour le au moins un premier morceau de musique, la au moins une unité de métadonnées prédéfinie (M1, M2, M3) et la au moins une première unité de données prédéfinie (D1, D2, D3, D4).

9. Procédé selon l'une des revendications précédentes,
**caractérisé en ce**
**qu'**il est vérifié si la source de données (E) comprend au moins une indication de temps (T1, T2, T3, T4), affectée au morceau de musique, en particulier une indication sur un moment de début et un moment de fin ou une durée (T1, T2, T3, T4), à partir de laquelle est déterminée une durée totale (T1+T4, T2, T3), moyennant quoi, au cas où il en est ainsi, l'indication de temps (T1, T2, T3, T4) est lue, moyennant quoi, en particulier, au cas où la source de données (E), mise à disposition, présente de manière multiple plusieurs indications de temps (T1, T2, T3, T4), affectées au au moins un premier morceau de musique, une durée totale (T1+T4, T2, T3) est déterminée à partir des indications de temps (T1, T2, T3, T4) respectives.

10. Procédé selon la revendication 10,
**caractérisé en ce que**
la durée totale (T1, T2, T3, T4) est consignée dans la liste (L) pour le au moins un premier morceau de musique.

11. Procédé selon l'une des revendications précédentes,
**caractérisé en ce que**,
si la deuxième vérification indique qu'aucun des seconds morceaux de musique ne peut être identifié clairement avec le au moins un premier morceau de musique, détermination de candidats entrant en ligne de compte pour une identification à partir des seconds morceaux de musique et délivrance des candidats, par l'intermédiaire d'une interface utilisateur, à un utilisateur et mise à disposition d'une possibilité de sélection pour l'utilisateur en vue de la sélection de l'un des candidats.

12. Procédé selon l'une des revendications 8 à 11,
**caractérisé en ce que**,
après l'établissement de la liste (L), la liste (L) est délivrée à un utilisateur et une entrée de l'utilisateur est reçue et que la liste (L) est modifiée ou non en fonction de l'entrée.

13. Réseau avec un premier dispositif informatique et un second dispositif informatique, le réseau étant constitué pour l'exécution d'un procédé selon l'une des revendications précédentes.
